# EUROPÄISCHE PATENTSCHRIFT

(11) **EP 1 480 239 B1**
(45) Veröffentlichungstag und Bekanntmachung des Hinweises auf die Patenterteilung: **17.11.2010**
(21) Anmeldenummer: 04010136.2
(22) Anmeldetag: 29.04.2004
(51) Int. Cl.: H01H 9/54

(54) **Verfahren und Schaltungsanordnung zur Funktionsüberwachung eines elektronisch-mechanischen Positionsschalters**
Method for operating and monitoring circuit for an electronic-mechanical position switch
Procédé d'actionner et circuit de surveillance pour un interrupteur de position électronique-mécanique

(30) Priorität: 17.05.2003 DE 10322385
(43) Veröffentlichungstag der Anmeldung: 24.11.2004
(73) Patentinhaber: Eaton Industries GmbH, 53115 Bonn (DE)
(72) Erfinder: Högener, Hans-Jürgen, 53859 Niederkassel (DE); Volberg, Jürgen, 53844 Troisdorf (DE); Wolff, Bernd, 53773 Hennef (DE); Völlmar, Guido, 51063 Köln (DE)
(74) Vertreter: Leadbetter, Benedict

(56) Entgegenhaltungen:
- DE-A1- 3 734 431
- DE-U1- 20 203 214
- US-A- 5 621 398

## Beschreibung

Die Erfindung betrifft ein Verfahren und eine Schaltungsanordnung zur Funktionsüberwachung eines elektronisch-mechanischen Positionsschalters nach den Oberbegriffen der unabhängigen Ansprüche.

In der Produktinformation der Firma Klöckner-Moeller W 13-7364, 4/1996 "Überwachen und melden: zuverlässig und sicher, Positionsschalter AT" ist ein elektromechanischer Positionsschalter beschrieben. In einem Gehäuse sind mechanische Schaltkontakte, beispielsweise Paare oder Einzelkontakte von Öffnern und/oder Schließern angeordnet und ein längsverschieblicher Kuppenstößel zur unmittelbaren mechanischen Betätigung der Schaltkontakte gelagert. Um die Positionsschalter möglichst vielfältig einsetzen zu können, werden dem Kuppenstößel austauschbare Antriebsköpfe vorgesetzt. So kann auf das Gehäuse des Positionsschalters wahlweise ein Antriebskopf mit Schwenkhebel, Rollenhebel, Verstellrollenhebel oder Federstab befestigt werden.

Ein elektronisch-mechanischer Positionsschalter ist aus der Gebrauchsmusterschrift DE 202 03 214 U1 bekannt. In einem Gehäuse sind ein Betätigungsstößel, ein Potentiometer, ein Mikrocontroller und elektronische Schaltkontakte angeordnet. Der Betätigungsstößel ist mit dem Schleifer des Potentiometers gekoppelt. Bei Stößelbetätigung wird dem Mikrocontroller ein sich änderndes elektrisches Signal zugeführt, das beim Über- bzw. Unterschreiten eines programmierten Schwellenwertes eine Zustandsänderung der Schaltkontakte bewirkt. Die Schaltkontakte sind ausgangsseitig mit den Anschlussklemmen verbunden. Um den Umschaltpunkt einzustellen, wird vorgeschlagen, über einen Programmieranschluss oder über Auswahlschalter den Schwellenwert zu programmieren oder aus einer im Mikrocontroller hinterlegten Anzahl vorgegebener Schwellenwerte auszuwählen. Es werden keine Angaben darüber gemacht, wie Ausfälle der Elektronik erkannt werden können um zu verhindern, dass fehlerhafte Ausgangssignale zu Fehlsteuerungen an der Peripherie des Positionsschalters führen.

Aus der Druckschrift DE 37 34 431 C2 ist ein Verfahren zur Überwachung des Zustandsübergangs von Endstufenschaltungen für Stellglieder vom geschlossenen in den geöffneten Zustand bekannt. Bei laufendem Betrieb werden die Einschaltsignale periodisch durch Testsignale unterbrochen. Von den Endstufenschaltungen findet eine Rückführung zu einem Mikrocomputer statt, der bei Ausbleiben des Zustandsübergangs dafür sorgt, dass die Endstufenschaltungen für Dauer in den geöffneten Zustand gesetzt werden. Die Testsignale sind kürzer als die Ansprech-Reaktionszeit der Stellglieder. Eine Überwachung des Mikrocomputers findet nicht statt.

Der Erfindung liegt daher die Funktionsüberwachung eines elektronisch-mechanischen Positionsschalters als Aufgabe zugrunde.

Ausgehend von einem Verfahren bzw. einer Schaltungsanordnung der eingangs genannten Art wird die Aufgabe erfindungsgemäß durch die jeweiligen Merkmale der unabhängigen Ansprüche gelöst, während den abhängigen Ansprüchen vorteilhafte Weiterbildungen der Erfindung zu entnehmen sind.

Das erfindungsgemäße Verfahren testet die Watchdog-Überwachung einerseits und das Abschaltvermögen des mindestens einen elektronischen Schaltkontaktes anderseits. Die Watchdog-Überwachung dient dazu, Ausfälle des Mikrocontrollers zu erkennen und zur Vermeidung von Fehlsteuerungen an der Peripherie des Positionsschalters den Schaltkontakt sicher in den geöffneten Zustand zu überführen. Hierzu werden in bekannter Weise vom Mikrocontroller Watchdog-Signale generiert, die bei Ausbleiben auf einen Ausfall des Mikrocontrollers schließen lassen. Mit dem Begriff "Abschaltvermögen" ist gemeint, dass beim Überschreiten des Umschaltpunktes durch den Stößel in entsprechende Richtung der bis dahin geschlossene Schaltkontakt auch tatsächlich öffnet. Beim Testen der Watchdog-Funktion wird bei funktionstüchtigem Mikrocontroller mit den Verfahrensschritten **A** und **B** vorsorglich getestet, ob ein Ausbleiben der Watchdog-Signale von den die Watchdog-Signale überwachenden Schaltungsmitteln auch tatsächlich erkannt wird. Beim Testen des Abschaltvermögens wird mit den Verfahrensschritten **C** und **D** geprüft, ob der sich im geschlossenen Zustand befindende Schaltkontakt in der Lage ist, geöffnet zu werden. Der geschlossene Zustand des elektronischen Schaltkontaktes wird bei Funktionstüchtigkeit durch den schließenden Signalpegel des Steuersignals bewirkt. Es kann jedoch während der Ausgabe des schließenden Steuersignals ein Bauelementeausfall auf dem Wege vom Ausgang des Mikrocontrollers bis zum Schaltkontakt auftreten, in dessen Folge der Schaltkontakt nicht mehr den geöffneten Zustand einnehmen kann, beispielsweise infolge des Durchlegierens der Ausgangselektroden des elektronischen Schaltkontaktes. Derartige Ausfälle müssen frühzeitig erkannt werden, da unter Umständen der Betätigungsstößel den Umschaltpunkt für eine lange Zeit nicht durchläuft.

Bei positivem Verlauf der Tests gemäß den Verfahrensschritten **A**, **B** und **C**, **D** sind die im Wesentlichen durch material- und programmbedingte Verzögerungszeiten bestimmten ersten bzw. zweiten Testintervalle, in denen der geschlossene Schaltkontakt kurzzeitig geöffnet wird, von geringer Dauer (typisch sind 200 bis 400 µs) und somit ohne spürbaren Einfluss auf die Peripherie des Positionsschalters.

Zweckmäßigerweise treten die ersten und die zweiten Testintervalle in periodischen Abständen auf, vorzugsweise nach einem zeitlichem Abstand, der 500 bis 1200 Programmzyklen des Mikrocontrollers umfasst, was einer Testperiode von 2 bis 6 s entspricht.

Eine vorteilhafte Weiterbildung des erfindungsgemäßen Verfahrens besteht darin, dass zur Ausblendung zufälliger Störungen erst bei wiederholtem Ausbleiben des erwarteten Zustandsübergangs des Schaltkontaktes während des ersten oder des zweiten Testintervalls, d.h. erst nach wiederholtem Durchlauf der Verfahrensschritte **A** bis **D**, der Schaltkontakt bleibend geöffnet wird. Eine Anzahl von jeweils zwei Verfahrensdurchläufen führt schon zu einer erheblichen Verbesserung der Störfestigkeit.

Eine andere vorteilhafte Weiterbildung besteht darin, dass zur Verbesserung der Funktionsüberwachung zusätzlich der vom Mikrocontroller vorgegebene logische Zustand durch Rücklesen mit dem tatsächlichen physikalischen Zustand des mindestens einen Schaltkontaktes verglichen wird und dass bei fehlender Übereinstimmung das Steuersignal den öffnenden Signalpegel einnimmt sowie die Ausgabe der Watchdog-Signale unterbleibt.

Im Ergebnis einer fehlerhaften Watchdog-Überwachung, eines fehlenden Ausschaltvermögens oder eines unlogischen Ausgangszustandes ist es von Vorteil, vom Mikrocontroller ein Fehlermeldesignal, beispielsweise zur Ansteuerung einer im Gehäuse angebrachten LED-Anzeige, auszugeben.

Mit der erfindungsgemäßen Schaltungsanordnung einschließlich des programmgesteuerten Mikrocontrollers wird sowohl die Watchdog-Überwachung als auch das Abschaltvermögen des mindestens einen elektronischen Schaltkontaktes hardwaremäßig überprüft.

Eine aktive Zeitstufe erfasst vom Mikrocontroller ausgehende Watchdog-Signale und nimmt unterschiedliche Ausgangszustände ein, je nachdem ob dynamisch wechselnde Watchdog-Signale anstehen oder nicht. Bei vorhandenen Watchdog-Signalen aktiviert die Zeitstufe einen Versorgungstreiber zum Anlegen eines Versorgungspotentials an mindestens eine Ausgangsschaltung, die den mindestens einen Schaltkontakt enthält. Mit Beginn der ersten Testintervalle setzt der Mikrocontroller die Watchdog-Signale aus, worauf die Zeitstufe den Versorgungstreiber zum Trennen der Ausgangsschaltung vom Versorgungspotential deaktiviert. Befand sich der Schaltkontakt zuvor im geschlossenen Zustand, so geht er bei intakter Zeitstufe und intaktem Versorgungstreiber in den geöffneten Zustand über. Der Ausgang des Schaltkontaktes wird zwecks Überprüfung mit dem erwartenden logischen Ergebnis zum Mikrocontroller zurückgeführt. Nach Erfassung des ordnungsgemäßen Zustandsüberganges gibt der Mikrocontroller wieder Watchdog-Signale aus, worauf die Zeitstufe den Versorgungstreiber wiederum zum Durchleiten des Versorgungspotentials aktiviert und der kurzzeitig geöffnete Schaltkontakt erneut schließt. Bei gestörter Watchdog-Überwachung, d.h. bei Ausbleiben des erwarteten Zustandsüberganges, wird dagegen durch Setzen des Steuersignals in den öffnenden Signalpegel der Schaltkontakt über die Ausgangsschaltung zwangsläufig geöffnet.

Zu Beginn zweiter Testintervalle wird das vom Mikrocontroller gelieferte Steuersignal, wenn es bis dahin den schließenden Signalpegel eingenommen hat, in den öffnenden Signalpegel überführt. Nachdem der Mikrocontroller den ordnungsgemäßen Zustandsübergang vom zurückgeführten Ausgang des Schaltkontaktes eingelesen hat, schließt er durch Zurücknahme des öffnenden Signalpegels erneut den kurzzeitig geöffneten Schaltkontakt. Bei fehlendem Abschaltvermögen der Ausgangsschaltung, d.h. bei Ausbleiben des erwarteten Zustandsüberganges, wird dagegen durch Abschalten der Watchdog-Signale der Schaltkontakt über die Zeitstufe und den Versorgungstreiber zwangsläufig geöffnet.

Die Dauer (typisch sind 200 bis 400 µs) der testweisen Öffnung des mindestens einen Schaltkontaktes wird im Wesentlichen durch die material- und programmbedingten Verzögerungszeiten der Schaltungsanordnung bestimmt und ist ohne spürbaren Einfluss auf die Peripherie des Positionsschalters.

Eine vorteilhafte Ausbildung der erfindungsgemäßen Schaltungsanordnung besteht darin, dass die Zeitstufe nachfolgend aus einer ersten und einer zweiten Verstärkerstufe gebildet ist, die am Eingang ein passives Differenzier- bzw. Integrierglied aufweist. Durch am Differenzierglied anstehende dynamische Watchdog-Signale ändert sich der Ausgangszustand der ersten Verstärkerstufe ebenfalls dynamisch, was zur Folge hat, dass sich das Integrierglied nicht bis zu einem Schwellpegel auf- oder entladen kann, wodurch die zweite Verstärkerstufe im ersten Ausgangszustand verbleibt. Mit aussetzenden Watchdog-Signalen nimmt die erste Verstärkerstufe einen definierten Zustand ein, was zur Folge hat, dass das Integrierglied den Schwellpegel über- bzw. unterschreitet und damit die zweite Verstärkerstufe in den zweiten Ausgangszustand übergeht.

Es ist zweckmäßig, zwischen dem Ausgang des Schaltkontaktes und dem Kontrolleingang eine zusätzliche, entkoppelnde Verstärkerstufe anzuordnen, insbesondere wenn diese mit entstörenden Mitteln versehen ist.

Es ist vorteilhaft, den Mikrocontroller mit einem Meldeausgang zur Abgabe einer Fehlermeldung bei fehlerhaftem Testergebnis über ein optisches Signalelement auszustatten.

Weitere Einzelheiten und Vorteile der Erfindung ergeben sich aus den folgenden, anhand von Figuren erläuterten Ausführungsbeispielen. Es zeigen
- Figur 1:: die Blockdarstellung eines nach dem erfindungsgemäßen Verfahren betriebenen elektronisch-mechanischen Positionsschalters;
- Figur 2:: das Ablaufdiagramm des erfindungsgemäßen Verfahrens;
- Figur 3:: die Darstellung einer erfindungsgemäßen Schaltungsanordnung;
- Figur 4 -7:: beispielhafte Signaldiagramme.

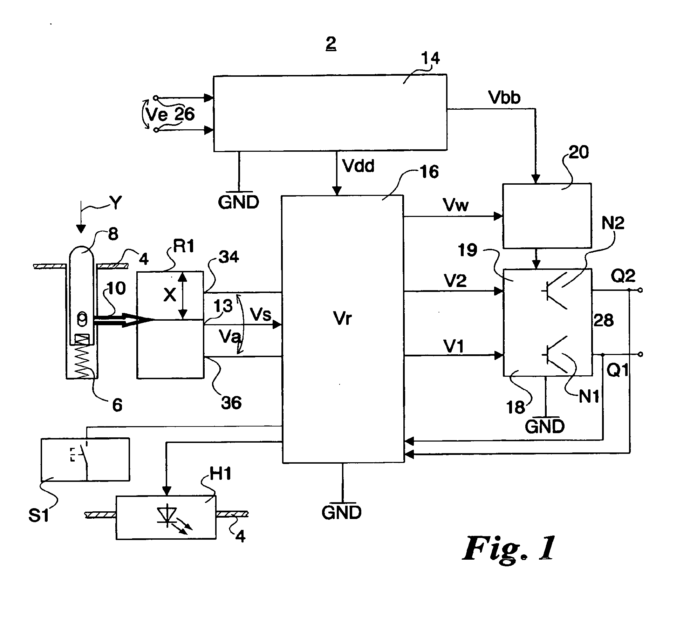

Nach Fig. 1 ist der elektronisch-mechanische Positionsschalter 2 in einem kastenförmigen Gehäuse 4, das allerdings nur rudimentär angedeutet ist, aufgebaut. Als mechanische Komponenten sind in dem Gehäuse 4 ein mit oder entgegen der Federkraft einer Druckfeder 6 in Betätigungsrichtung Y verschiebbarer Betätigungsstößel 8 sowie ein mit diesem gekoppelter Schleifer 10 eines Potentiometers R1 gelagert. Im Gehäuse 4 sind weiterhin übliche Stromversorgungsmittel 14, ein Mikrocontroller 16, eine erste und eine zweite Ausgangsschaltung 18 bzw. 19, überwachende Schaltungsmittel 20, eine LED-Anzeige H1 und ein Quittiertaster S1 angeordnet. Die elektronischen Komponenten sind auf einer Leiterplatte oder auf zwei miteinander verbundenen Leiterplatten befestigt. Der Quittiertaster S1 ist als DIP-Schalter ausgeführt. Über ein Paar erster Anschlussklemmen 26 wird eine Eingangsspannung Ve zugeführt, die durch die Stromversorgungsmittel 14 in ein positives erstes Versorgungspotential Vbb und in ein demgegenüber niedrigeres, positives zweites Versorgungspotential Vdd gewandelt wird. Die Versorgungspotentiale Vbb und Vdd sind auf das Bezugspotential GND (Massepotential) bezogen. Die Ausgangsschaltungen 18 und 19, welche jeweils einen ersten und einen zweiten elektronischen Schaltkontakt N1 bzw. N2 beinhalten, werden über die Schaltungsmittel 20 mit dem ersten Versorgungspotential Vbb und der Mikrokontroller 16 direkt mit dem zweiten Versorgungspotential Vdd gespeist.

Um die Einsatzmöglichkeiten des Positionsschalters 2 zu erhöhen, können dem Betätigungsstößel 8 austauschbare Antriebsköpfe vorgesetzt werden. Die Position des Betätigungsstößels 8 wird auf den Schleifer 10 des Potentiometers R1 übertragen. Am Schleifer 10 steht je nach Schleiferposition X ein unterschiedlich hohes Schleiferpotential Vs an. Das auf das Bezugspotential GND sich beziehende Schleiferpotential Vs wird vom Mikrocontroller 16 in einen digitalen Wert umgewandelt und mit einem gespeicherten Schwellenwert Vr verglichen. Bei der Erfassung des Schleiferpotentials Vs wird an die beiden Außenanschlüsse 34 und 36 des Potentiometers R1 eine Auβenspannung Va gelegt, die vom Mikrocontroller 16 geliefert wird. Vom Mikrocontroller 16 werden Steuersignale V1 und V2 ausgegeben, deren Signalpegel davon abhängt, ob der Wert des Schleiferpotentials Vs über oder unter dem Schwellenwert Vr liegt. Durch die Steuersignale V1 und V2 werden in Abhängigkeit der Schleiferposition X und je nachdem, ob die elektronischen Schaltkontakte N1 und N2 für sich genommen als Schließer- oder Öffnerkontakt wirken sollen, die Schaltkontakte N1 und N2 in den geschlossenen oder geöffneten Zustand gesteuert. Die Festlegung des Kontakte N1 und N2 hinsichtlich ihrer Öffner- bzw. Schließereigenschaft erfolgt durch Programmierung des Mikrocontrollers 16. Wenn sich die Position X des Schleifers 10 oberhalb des durch den Schwellenwert Vr festgelegten Umschaltpunktes befindet oder bewegt, ist der Treiberausgang Q1 oder Q2 im Falle eines Öffnerkontaktes gesperrt, jedoch im Falle eines Schließerkontaktes leitend mit dem ersten Versorgungspotential Vbb verbunden. Wenn sich die Position X des Schleifers 10 dagegen unterhalb des Umschaltpunktes befindet oder bewegt, ist der entsprechende Treiberausgang Q1 oder Q2 im Falle eines Öffnerkontaktes leitend mit dem ersten Versorgungspotential Vbb verbunden, jedoch im Falle eines Schließerkontaktes nichtleitend. Die Treiberausgänge Q1 und Q2 sind mit einem Paar zweiter Anschlussklemmen 28 verbunden, an die von dem Positionsschalter 2 anzusteuernde elektrische und/oder elektronische periphere Einrichtungen angeschlossen werden.

Der mit dem Mikrocontroller 16 verbundene Quittiertaster S1 dient dazu, eine gewünschte Position des Betätigungsstößels 8 als neuen Umschaltpunkt des Positionsschalters 2 einzustellen, indem durch Betätigen des Quittiertasters S1 das zugehörige Schleiferpotential Vs als neuer maßgeblicher Schwellenwert Vr in den Mikrocontroller 16 übernommen wird. Der Mikrocontroller 16 gibt bei bestimmten Betriebszuständen unterschiedliche Signale an die LED-Anzeige H1 ab, um Fehler, Bestätigungen und bestimmte Zustände durch Leuchten oder Blinken mit unterschiedlicher Blinkfrequenz zu signalisieren. Die überwachenden Schaltungsmittel 20 dienen zur Überwachung der Funktionsfähigkeit des Mikrocontrollers 16 und überwachen vom Mikrocontroller 16 ausgegebene Watchdog-Signale Vw.

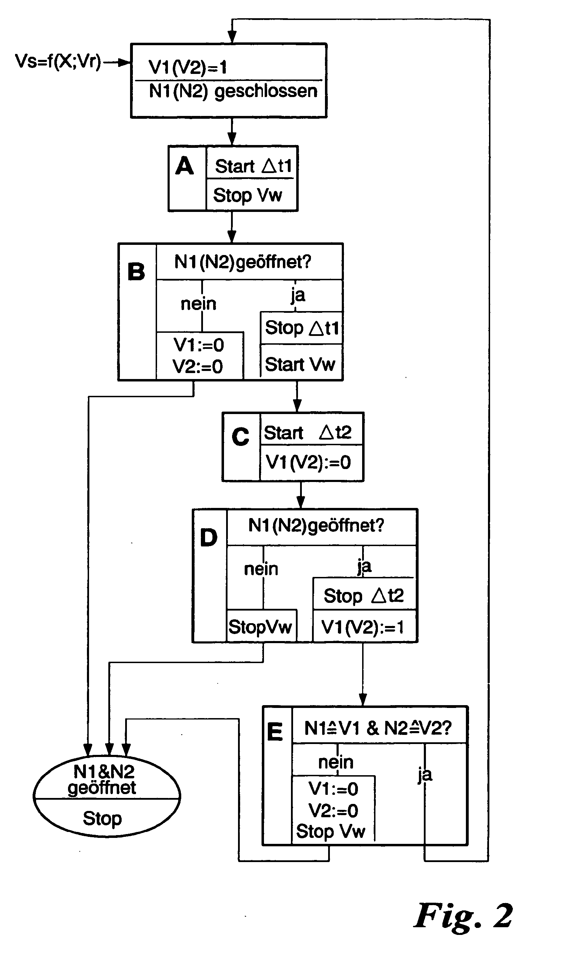

Zur Erläuterung des erfindungsgemäßen Verfahrens zur Funktionsüberwachung des elektronisch-mechanischen Positionsschalters 2 gemäß Fig. 1 wird im Folgenden auf Fig. 2 Bezug genommen, wobei angenommen wird, dass sich mindestens einer der Schaltkontakte N1, N2 im geschlossenen Zustand befindet. Hierbei bedeuten die logischen Werte "0" bzw. "1" in Verbindung mit den Steuersignalen V1 und V2, dass die zugehörigen Schaltkontakte N1 und N2 in Abhängigkeit von der jeweiligen Schleiferposition X und dem Schwellenwert Vr den geöffneten bzw. geschlossenen Zustand einnehmen sollen.

Der Mikrocontroller 16 gibt Watchdog-Signale Vw aus, die in kurzen unregelmäßigen Abständen zwischen zwei logischen Zuständen dynamisch wechseln. In dem in zeitlichen Abständen wiederholten Verfahrensschritt **A** wird mit Beginn eines ersten Testintervalls Δt1 ein Ausfall des Mikrocontrollers 16 durch programmiertes Aussetzen der Watchdog-Signale Vw simuliert. Im nachfolgenden Verfahrensschritt **B** wird geprüft, ob das Ausbleiben der Watchdog-Signale Vw von den überwachenden Schaltungsmitteln 20 erkannt wird. Bei intakter Watchdog-Überwachung durch die Schaltungsmittel 20 und Ausbleiben der Watchdog-Signale Vw muss der Schaltkontakt N1 und/oder N2, wenn er sich zuvor im geschlossenen Zustand befunden hat, durch Wegnahme seiner Stromversorgung bzw. des ersten Versorgungspotentials Vbb in den geöffneten Zustand übergehen. Im positiven Falle führt dieser vom Mikrocontroller 16 erkannte Zustandsübergang zur Beendigung des ersten Testintervalls Δt1 und zur Wiederaufnahme der Ausgabe von Watchdog-Signalen Vw. Im negativen Falle wird das zugehörige Steuersignal V1 und/oder V2 zum Öffnen der Schaltkontakte N1 und/oder N2 gesetzt. Damit geht bei Ausfall der überwachenden Watchdog-Funktion der mindestens eine Schaltkontakt N1 und/oder N2 auf Dauer in den geöffneten Zustand über. Die Ausgabe von Watchdog-Signalen Vw unterbleibt weiterhin.

In dem zeitlich versetzt gegenüber Verfahrensschritt A wiederholten Verfahrensschritt **C** wird mit Beginn eines zweiten Testintervalls Δt2 ein Umschalten des mindestens einen Steuersignals V1 und/oder V2, wenn dieses bis dahin den schließenden Signalpegel innehatte, in den öffnenden Zustand simuliert. Im nachfolgenden Verfahrensschritt D wird das Ausschaltvermögen des zugehörigen Schaltkontaktes N1, N2 in Verbindung mit der zugehörigen Ausgangsschaltung 18 bzw. 19 getestet. Bei intaktem Ausschaltvermögen muss der bis dahin geschlossene Schaltkontakt N1 und/oder N2 durch den Wechsel des zugehörigen Steuersignals V1 und/oder V2 in den geöffneten Zustand übergehen. Im positiven Falle führt dieser vom Mikrocontroller 16 erkannte Zustandsübergang zur Beendigung des zweiten Testintervalls Δt2 und zum Zurückschalten des Steuersignals V1 und/oder V2 in der schließenden Signalpegel. Im negativen Falle endet die Ausgabe der Watchdog-Signale Vw, der Ausgang des in der Folge vom seiner Stromversorgung getrennten Schaltkontaktes N1 und/oder N2 wirkt wie ein geöffneter Kontakt auf die Peripherie des Positionsschalters. Das mindestens eine Steuersignal V1, V2 nimmt weiterhin den öffnenden Signalpegel ein.

Außerhalb der Testintervalle Δt1 und Δt2 wird mit dem Verfahrensschritt **E** geprüft, ob der physikalische Ausgangszustand der Schaltkontakte N1 und N2 mit der logischen Vorgabe vom Mikrocontroller 16 übereinstimmt. Im positiven Falle, d.h. bei Übereinstimmung, wird die Funktionsüberwachung weiter mit den Verfahrensschritten **A** bis **E** fortgeführt. Im negativen Falle, d.h. bei Nichtübereinstimmung des Zustandes beider Schaltkontakte N1 und N2 mit den Steuersignalen V1 und V2, wird das Steuersignal V1 und/oder V2, das bisher den schließenden Signalpegel eingenommen hatte, zum Öffnen gesetzt, und die Ausgabe der Watchdog-Signale Vw beendet.

Durch das erfindungsgemäße Verfahren ist sichergestellt, dass ein negatives Testergebnis in einem der Verfahrensschritte **B**, **D** oder **E** dazu führt, dass sowohl durch Beendigung der Ausgabe von Watchdog-Signalen Vw als auch durch Überführen oder Halten der Steuersignale V1 und V2 in den bzw. in dem öffnenden Signalpegel die elektronischen Schaltkontakte N1 und N2 zwangsweise geöffnet sind. Durch das zwangsweise Öffnen oder Offenhalten der Schaltkontakte N1 und N2 bei ausfallender Funktionsfähigkeit des Positionsschalters 2 wird den einschlägigen Sicherheitsvorschriften Genüge getan, die vorschreiben, dass bei Ausfall eines elektromechanischen oder eines elektronisch-mechanischen Positionsschalters von den Schaltkontakten nicht der aktive, d.h. geschlossene Zustand eingenommen werden darf.

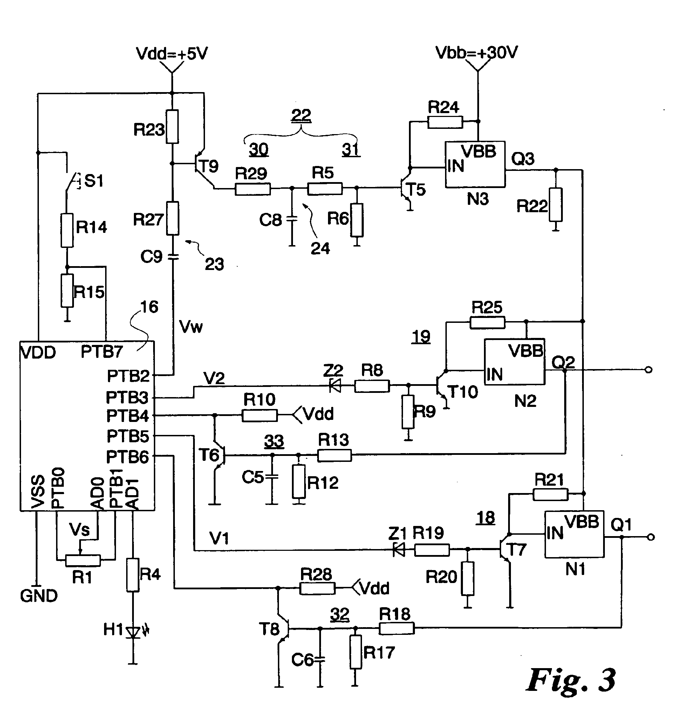

Zur Erläuterung der erfindungsgemäßen Schaltungsanordnung wird im Folgenden auf Fig. 3 Bezug genommen. Für gleiche Funktionselemente werden die zuvor in Fig. 1 verwendeten Bezugszeichen verwendet.

Dem Mikrocontroller 16 wird an seinen Anschlüssen VSS und VDD das Bezugspotential GND bzw. das zweite Versorgungspotential Vdd in Höhe von +5V gegenüber Bezugspotential GND zugeführt. Die Außenanschlüsse des Potentiometers R1 sind über die Ausgänge PTB0 und PTB1 vom Mikrocontroller 16 mit einer Außenspannung beaufschlagt. Vom Schleifer des Potentiometers R1 wird die Schleiferspannung Vs an einen Analogeingang AD0 des Mikrocontrollers 16 geführt. Der Quittiertaster S1 verbindet das zweite Versorgungspotential Vdd mit einem gegen Bezugspotential führenden Spannungsteiler R14, R15, dessen Teilungspunkt mit einem Eingang PTB7 des Mikrocontrollers 16 verbunden ist. Die an den Steuerausgängen PTB5 und PTB3 des Mikrocontrollers 16 ausgegebenen Steuersignale V1 und V2 steuern die Ausgangsschaltungen 18 und 19. Die Ausgangsschaltung 18 bzw. 19 besteht aus dem elektronischen Schaltkontakt N1 bzw. N2 sowie aus einem vorgeschalteten Schwe!!wertschalter. Der dem Schaltkontakt N1 bzw. N2 vorgeschaltete Schwellwertschalter ist mit einem NPN-Transistor T7 bzw. T10 in Emitterschaltung versehen. Dem Transistor T7 bzw. T10 ist eine Z-Diode Z1 bzw. Z2 und ein Spannungsteiler R19, R20 bzw. R8, R9 vorgeschaltet. Kollektorseitig ist der Transistor T7 bzw. T10 mit einem Arbeitswiderstand R21 bzw. R25 und dem Eingang IN des Schaltkontaktes N1 bzw. N2 verbunden. Die Treiberausgänge Q1, Q2 der Schaltkontakte N1, N2 dienen zur Ansteuerung elektrischer Einrichtungen an der Peripherie des Positionsschalters 2. Die Versorgungsanschlüsse VBB der Ausgangsschaltungen 18, 19 werden über einen Versorgungstreiber N3 mit dem ersten Versorgungspotential Vbb in Höhe von beispielhaft +30V beliefert. Wenn das Steuersignal V1 bzw. V2 den schließenden Signalpegel, d.h. den High-Pegel eingenommen hat, befindet sich der betreffende Schaltkontakt N1 bzw. N2 im geschlossenen Zustand. In diesem Falle steht an einer mit dem Treiberausgang Q1 bzw. Q2 verbundenen, zum Bezugspotential geführten peripheren Last ein High-Pegel an, der sich etwas unterhalb des ersten Versorgungspotentials Vbb befindet. Wenn das Steuersignal V1 bzw. V2 dagegen den öffnenden Signalpegel, d.h. den Low-Pegel eingenommen hat, befindet sich der betreffende Schaltkontakt N1 bzw. N2 im geöffneten Zustand. In diesem Falle steht an einer mit dem Treiberausgang Q1 bzw. Q2 verbundenen, zum Bezugspotential geführten peripheren Last ein Low-Pegel an, der mit dem Bezugspotential GND identisch ist. Im Beispiel werden für den Mikrocontroller 16 ein handelsüblicher Mikrocontroller mit der Typenbezeichnung M68HC908QY4 der Firma Motorola Inc. und für die elektronischen Schaltkontakte N1, N2 sowie den Versorgungstreiber N3 handelsübliche Schaltkreise mit der Typenbezeichnung BTS 4140 N, die ausgangsseitig einen vertikalen N-Kanal-Leistungs-MOSFET enthalten und von der Infineon Technologies AG angeboten werden, verwendet.

Der Mikrocontroller 16 gibt über einen Ausgang PTB2 Watchdog-Signale Vw aus, die in kurzen, nicht unbedingt regelmäßigen Abständen zwischen zwei logischen Zustandspegeln dynamisch wechseln, bis sie zu Beginn erster Testintervalle aussetzen. Eine nachfolgende aktive Zeitstufe 22 nimmt unterschiedliche Ausgangszustände ein, je nachdem ob dynamische Watchdog-Signale Vw anstehen oder nicht. Die Zeitstufe 22 enthält eine erste Verstärkerstufe 30 mit einem PNP-Transistor T9 in Kollektorschaltung, dessen Emitter mit dem zweiten Versorgungspotential Vdd verbunden ist. Eingangsseitig ist die Zeitstufe 22 mit einem passiven Differenzierglied 23, bestehend aus der Reihenschaltung eines ersten Kondensators C9, eines Widerstandes R27 und eines gegen das zweite Versorgungspotential Vdd geführten Widerstandes R23 versehen. Der Verbindungspunkt der als Spannungsteiler wirkenden Widerstände R23, R27 ist mit der Basis des Transistors T9 verbunden. Die erste Verstärkerstufe 30 arbeitet mit einem passiven Integrierglied 24 zusammen. Das Integrierglied 24 besteht aus der Reihenschaltung eines kollektorseitigen Widerstandes R29 und einer zum Bezugspotential geführten Parallelschaltung aus einem zweiten Kondensator C8 und zwei in Reihe geschalteten Entladewiderständen R5, R6. Eine zweite Verstärkerstufe 31 enthält einen NPN-Transistor T5 in Kollektorschaltung und das eingangsseitige Integrierglied 24. Der Transistor T5 ist über seinen Emitter mit dem Bezugspotential, über seine Basis mit dem Verbindungspunkt der Widerstände R8, R9 und über seinen Kollektor mit einem zum ersten Bezugspotential Vbb geführten Arbeitswiderstand R24 verbunden.

Eingangsseitig am Differenzierglied 23 der Zeitstufe 22 anstehende dynamische Watchdog-Signale Vw bewirken bei jedem Übergang vom High- zum Low-Pegel ein kurzzeitiges Nachladen des zweiten Kondensators C8 über die erste Verstärkerstufe 30, sodass am Verbindungspunkt der Entladewiderstände R5, R6 ein Potential aufrechterhalten wird, das den Transistor T5 im leitenden Zustand mit Low-Pegel am Kollektor erhält. Der leitende Zustand des Transistors T5 entspricht einem ersten Ausgangszustand der Zeitstufe 22. Beim Ausbleiben von dynamischen Watchdog-Signalen Vw bleibt der Transistor T9 gesperrt, sodass infolge zunehmenden Entladung des zweiten Kondensators C8 der Transistor T5 in den gesperrten Zustand mit High-Pegel am Kollektor übergeht. Der gesperrte Zustand des Transistors T5 entspricht einem zweiten Ausgangszustand der Zeitstufe 22.

Die Zeitkonstanten des Differenziergliedes 23 sowie des Integriergliedes 24 sind so gewählt, dass die Zeitstufe 22 durch ein einzeln auftretendes Watchdog-Signal den ersten Ausgangszustand einnehmen und mit Verzögerung in den zweiten Ausgangszustand zurückfallen würde. Durch dynamische, d.h. ständig wechselnde Watchdog-Signale Vw wird die Zeitstufe 22 in dem ersten Ausgangszustand gehalten, wodurch der nachfolgende Versorgungstreiber N3 aktiviert ist. Bei Ausbleiben von Watchdog-Signalen Vw kippt die Zeitstufe 22 in den zweiten Ausgangszustand, wodurch der Versorgungstreiber N3 deaktiviert wird. Beim erneuten Auftreten dynamischer Watchdog-Signale Vw kippt die Zeitstufe wieder in den ersten Ausgangszustand zurück. Der Versorgungstreiber N3 leitet im aktiven Zustand das an seinem Versorgungseingang VBB anliegende erste Versorgungspotential Vbb nahezu unvermindert über seinen Treiberausgang Q3 zu den Ausgangsschaltungen 18 und 19. In diesem Falle kann der Schaltkontakt N1 bzw. N2 je nach logische Vorgabe durch das entsprechend vom Mikrocontroller 16 ausgegebene Steuersignal V1 bzw. V2 den geschlossenen (d.h. den leitenden) oder den geöffneten (d.h. den gesperrten Zustand) annehmen. Im deaktivierten Zustand trennt der Versorgungstreiber N3 die Ausgangsschaltungen 18, 19 vom ersten Versorgungspotential Vbb, wobei durch den zum Bezugspotential geführten Widerstand R22 der Treiberausgang Q3 das Bezugspotential GND einnimmt. In diesem Falle signalisiert der Schaltkontakt N1 bzw. N2 unabhängig von der logischen Vorgabe durch den Mikrocontroller 16 einen Zustand, der von der Peripherie des Positionsschalters 2 als geöffnet erkannt wird. Bei Ausbleiben der Watchdog-Signale Vw, entweder bewusst beim Testen innerhalb erster Testintervalle oder infolge eines Ausfalls des Mikrocomputers 16, sollte daher der Schaltkontakt N1 und/oder N2, wenn er sich zuvor im geschlossenen Zustand befunden hat, in den geöffneten Zustand übergehen.

Der Ausgang Q1 bzw. Q2 des Schaltkontaktes N1 bzw. N2 ist über eine zusätzliche Verstärkerstufe 32 bzw. 33 mit einem Kontrolleingang PTB6 bzw. PTB4 des Mikrocontrollers 16 wirkverbunden, der während der ersten Testintervalle den Zustand der Schaltkontakte N1 und N2 intern mit dem zu erwartenden logischen Ergebnis überprüft. Die zusätzliche Verstärkerstufe 32 enthält einen NPN-Transistor T8 in Emitterschaltung. Der Transistor T8 ist über seinen Emitter mit dem Bezugspotential, über seinen Kollektor mit dem Kontrolleingang PTB6 sowie mit einem zum zweiten Versorgungspotential Vdd geführten Arbeitswiderstand R28 verbunden. Die Basis des Transistors T8 ist über einen Vorwiderstand R18 mit dem Ausgang Q1 verbunden. Mit einer zum Bezugspotential geführten basisseitigen Parallelanordnung aus einem Kondensator C6 und einem Entladewiderstand R17 bildet der Vorwiderstand R18 ein Entstörglied zur Ausblendung kurzzeitiger Signalübergänge, die durch innere oder äußere Störeinflüsse auftreten und sonst zu Fehlauswertungen durch den Mikrocontroller 16 führen können. Die mit dem Treiberausgang Q2 verbundene zusätzliche Verstärkerstufe 33 besteht ebenfalls aus einem NPN-Transistor T6 in Emitterschaltung, einem Arbeitswiderstand R10 und einem Entstörglied 33, das seinerseits aus einem Kondensator C5, einem Entladewiderstand R12 und einem Vorwiderstand R13 gebildet ist.

Bei funktionsfähiger Watchdog-Überwachung, d.h. bei intakter Zeitstufe 22 und bei intaktem Versorgungstreiber N3, erfolgt der ordnungsgemäße Übergang des vor dem ersten Testintervall geschlossenen Schaltkontaktes N1 oder/und N2 in den geöffneten Zustand. Wird der erwartete Zustandübergang über den Kontrolleingang PTB6 oder/und PTB4 vom Mikrocontroller 16 erkannt, sendet dieser wieder dynamische Watchdog-Signale Vw über seinen Ausgang PTB2 aus. Daraufhin kippt die Zeitstufe 22 in den ersten Ausgangszustand zurück und gibt das erste Versorgungspotential Vbb für die Ausgangsschaltungen 18 und 19 frei, worauf der kurzzeitig geöffnete Schaltkontakt N1 oder/und N2 wieder seinen geschlossenen Zustand einnimmt. Die stattgefundene Unterbrechung des geschlossenen Zustandes des Schaltkontaktes N1 oder/und N2 war infolge der geringen schaltungs- und programmbedingten Verzögerungszeiten nicht lang genug, dass sie von einem mit den Treiberausgang Q1 bzw.

Q2 verbundenen Verbraucher hätte wahrgenommen werden können. Bei gestörter Watchdog-Überwachung hingegen, d.h. bei einem Defekt der Zeitstufe 22 oder/und des Versorgungstreibers N3, bei dem die Ausgangsschaltungen 18 und 19 nicht mit dem ersten Testintervall vom ersten Versorgungspotential Vbb getrennt werden, kann der Mikrocontroller 16 auch nicht den erwarteten Zustandsübergang des Schaltkontaktes N1 oder/und N2 an seinem Kontrolleingang PTB6 oder/und PTB4 empfangen. Der Mikrocontroller 16 unterlässt weiterhin das Aussenden von Watchdog-Signalen Vw, setzt gleichzeitig das zu dem Schaltkontakt N1 oder/und N2 gehörende Steuersignal V1 oder/und V2 in denjenigen Zustandpegel, der den Schaltkontakt N1 oder/und N2 in den geöffneten Zustand überführt, und liefert über seinen Ausgang AD1 ein Fehlermeldesignal an die LED-Anzeige H1. Sollte ein Defekt der Zeitstufe 22 oder/und des Versorgungstreibers N3 sich allerdings darin äußern, dass trotz vorliegender Watchdog-Signale Vw die Ausgangsschaltung 18 und 19 vom ersten Versorgungspotential Vbb getrennt sind, dann sind natürlich in diesem Falle beide Schaltkontakt N1 und N2 geöffnet. Ein Defekt bei der Watchdog-Überwachung führt demnach in jedem Falle zu einer Zwangsöffnung der elektronischen Schaltkontakte N1, N2.

Die erfindungsgemäße Schaltungsanordnung nach Fig. 3 gestattet auch die Überprüfung des Ausschaltvermögens der Ausgangsschaltungen 18 und 19, insbesondere der elektronischen Schaltkontakte N1 und N2. Hierzu wird zu Beginn von zweiten Testintervallen das vom Mikrocontroller 16 ausgegebene schließende Steuersignal V1 oder/und V2 vom High- auf den Low-Pegel umgeschaltet. Bei intakter Ausgangsschaltung 18 bzw. 19 sollte dadurch der vorher geschlossene Schaltkontakt N1 oder/und N2 in den geöffneten Zustand übergehen. Dieser Zustandsübergang wird wiederum vom Treiberausgang Q1 oder/und Q2 über die bereits beschriebene zusätzliche Verstärkerstufe 32 bzw. 33 in den Mikrocontroller 16 eingelesen und intern mit dem erwarteten Testzustand verglichen. Bei vorhandenem Ausschaltvermögen wird durch den während der zweiten Testintervalle am Kontrolleingang PTB6 oder/und PTB4 auftretenden Zustandsübergang das Steuersignal V1 oder/und V2 wieder in den schließenden Signalpegel zurückgesetzt. Die stattgefundene Unterbrechung des geschlossenen Zustandes des Schaltkontaktes N1 oder/und N2 war auch hierbei so kurz, dass sie von einem mit den Treiberausgang Q1 bzw. Q2 verbundenen Verbraucher nicht wahrgenommen werden konnte. Es kann jedoch auftreten, dass die Ausgangsschaltung 18 oder/und 19 ihr Ausschaltvermögen durch einen Defekt verloren hat, insbesondere infolge Durchlegierens der Ausgangsstrecke des elektronischen Schaltkontaktes N1 oder/und N2. In diesem Fall wird von entsprechenden Treiberausgang Q1 bzw. Q2 keine Zustandsänderung vom geschlossenen in den geöffneten Zustand an den Kontrolleingang PTB6 bzw. PTB4 zurück gemeldet. In diesem Falle erfolgt vom Mikrocontroller 16 kein Setzen des Steuersignals V1 bzw. V2 zurück auf dem schließenden Signalpegel. Stattdessen unterbleibt das weitere Aussenden von Watchdog-Signalen Vw über den Ausgang PTB2 an die Zeitstufe 22, was eine Trennung der Ausgangsschaltungen 18, 19 vom ersten Versorgungspotentials Vdd und damit ein zwangsweises Öffnen der Schaltkontakte N1, N2 zur Folge hat. Der Mikrocontroller 16 liefert über seinen Ausgang AD1 ein entsprechendes Fehlermeldesignal an die LED-Anzeige H1.

Über die Kontrolleingänge PTB6 und PTB4 kann der Mikrocontroller 16 auch kontrollieren, ob der durch das Schleiferpotential Vs in Verbindung mit dem eingestellten Schwellenwert Vr sich bestimmende logische Zustand an den Signalausgängen PTB5 und PTB3 mit dem Zustand an den Treiberausgängen Q1 und Q2 übereinstimmt. Bei Nichtübereinstimmung, beispielsweise verursacht durch einen Defekt in einer der Ausgangsschaltungen 18 bzw. 19 oder einer der zusätzlichen Schaltstufen 32 oder 33, werden durch den Mikrocontroller 16 programmmäßig die Steuersignale V1, V2 auf den öffnenden Signalpegel gesetzt und die Watchdog-Signale Vw abgeschaltet. Auch in diesem Falle erfolgt eine Zwangsöffnung der elektronischen Schaltkontakte N1, N2. Der Mikrocontroller 16 liefert auch in diesem Falle ein entsprechendes Fehlermeldesignal an die LED-Anzeige H1.

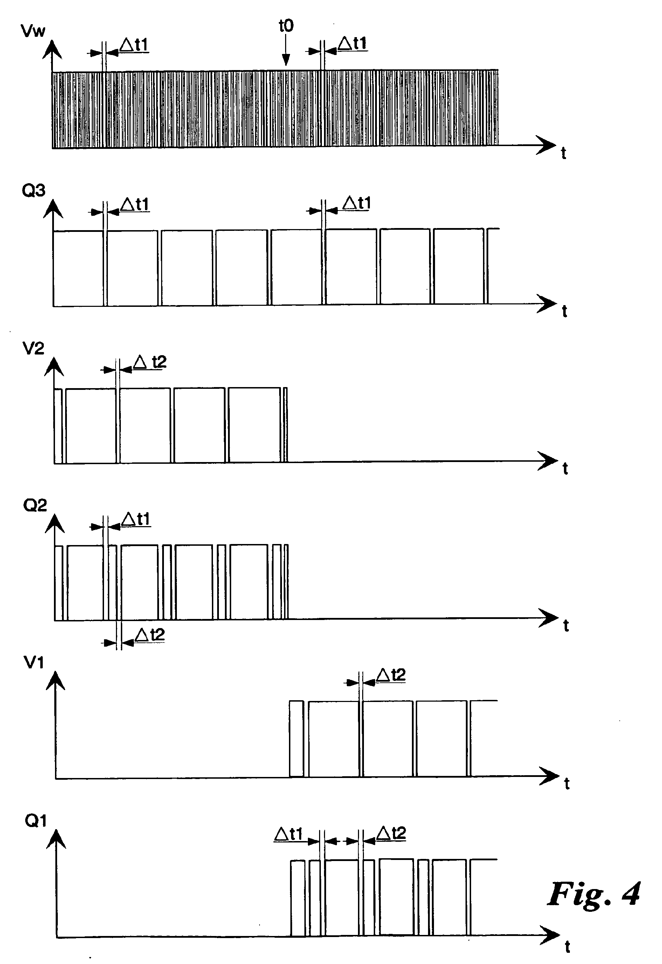

Die in Fig. 4 bis Fig. 7 über der Zeit t dargestellten Signaldiagramme dienen zu ergänzenden Erläuterung sowohl des erfindungsgemäßen Verfahrens nach Fig. 2 als auch der erfindungsgemäßen Schaltungsanordnung nach Fig. 3. In Fig. 4 bis Fig. 7 wird vorausgesetzt, dass der erste Schaltkontakt N1 als Schließerkontakt und der zweite Schaltkontakt N2 als Öffnerkontakt wirkt. Weiterhin wird angenommen, dass zu dem Umschaltzeitpunkt t0 der Umschaltpunkt vom Betätigungsstößel 8 überschritten wird. Unter normalen Umständen sollte demnach zum Zeitpunkt t0 das erste Steuersignal V1 vom Low- in den High-Pegel und damit der zum ersten Schaltkontakt N1 gehörende erste Treiberausgang Q1 vom geöffneten Zustand (Low-Pegel) in den geschlossenen Zustand (High-Pegel) übergehen. Dementsprechend sollte zum Zeitpunkt t0 das zweite Steuersignals V2 vom High- in den Low-Pegel und damit der zum zweiten Schaltkontakt N2 gehörende zweite Treiberausgang Q2 vom geschlossenen Zustand (High-Pegel) in den geöffneten Zustand (Low-Pegel) übergehen.

Fig. 4 zeigt Signalabläufe unter der Annahme, dass keine Ausfälle aufgetreten. Die in dichtem, jedoch nicht unbedingt regelmäßigem Abstand aufeinander folgenden Watchdog-Signale Vw wechseln dynamisch zwischen dem Low- und dem High-Pegel. Während der ersten Testintervalle Δt1 zur Kontrolle der Watchdog-Überwachungsfunktion werden die Watchdog-Signale Vw unterbrochen, wodurch der zum Versorgungstreiber N3 gehörende dritte Treiberausgang Q3 vom High-Pegel (nahezu in Höhe des ersten Versorgungspotentials Vbb) auf den Low-Pegel (Bezugspotential) abfällt. Obwohl vor dem Umschaltzeitpunkt t0 das zweite Steuersignal V2 den schließenden High-Pegel eingenommen hat, nimmt durch die fehlende Stromversorgung während der ersten Testintervalle Δt1 der zweite Treiberausgang Q2 kurzzeitig den Low-Pegel ein. Dieser Zustandübergang am zweiten Treiberausgang Q2 beendet jedes Mal erfolgreich die ersten Testintervalle Δt1 mit erneutem Auftreten von Watchdog-Signalen Vw. Vor dem Umschaltzeitpunkt t0 nimmt der erste Treiberausgang Q1 des geöffneten ersten Schaltkontaktes N1 unabhängig von den ersten Testintervallen Δt1 den Low-Pegel ein. Nach dem Umschaltzeitpunkt t0 hat das erste Steuersignal V1 den schließenden High-Pegel eingenommen. Durch die fehlende Stromversorgung während der ersten Testintervalle Δt1 nimmt der erste Treiberausgang Q1 kurzzeitig den Low-Pegel ein. Dieser Zustandübergang am ersten Treiberausgang Q1 beendet in diesem Falle jedes Mal erfolgreich die ersten Testintervalle Δt1. Nach dem Umschaltzeitpunkt t0 hat der zweite Treiberausgang Q2 des nunmehr geöffneten zweiten Schaltkontaktes N2 unabhängig von den ersten Testintervallen Δt1 den Low-Pegel eingenommen.

Außerhalb der erste Testintervalle Δt1 werden wieder Watchdog-Signale Vw ausgegeben und die Schaltkontakte N1 und N2 über den dritten Treiberausgang Q3 (High-Pegel) mit Strom versorgt. Vor dem Umschaltzeitpunkt t0 wird während der zweiten Testintervalle Δt2 zur Kontrolle des Abschaltvermögens das schließende zweite Steuersignal V2 auf den Low-Pegel gesetzt, wodurch der zweite Treiberausgang Q2 auf den Low-Pegel abfällt. Dieser Zustandübergang am zweiten Treiberausgang Q2 beendet jedes Mal erfolgreich die zweiten Testintervalle Δt2 mit erneutem Zurücksetzen des zweiten Steuersignals V2 auf den schließenden Signalpegel (High-Pegel). Vor dem Umschaltzeitpunkt t0 nimmt der erste Treiberausgang Q1 unabhängig von den zweiten Testintervallen Δt2 den Low-Pegel ein. Nach dem Umschaltzeitpunkt t0 wird während der zweiten Testintervalle Δt2 das schließende erste Steuersignal V1 auf den Low-Pegel gesetzt, wodurch der erste Treiberausgang Q1 auf den Low-Pegel abfällt. Dieser Zustandübergang am ersten Treiberausgang Q1 beendet in diesem Falle jedes Mal erfolgreich die zweiten Testintervalle Δt2 mit erneutem Zurücksetzen des ersten Steuersignals V1 auf den schließenden Signalpegel (High-Pegel). Nach dem Umschaltzeitpunkt t0 nimmt der zweite Treiberausgang Q2 unabhängig von den zweiten Testintervallen Δt2 den Low-Pegel ein.

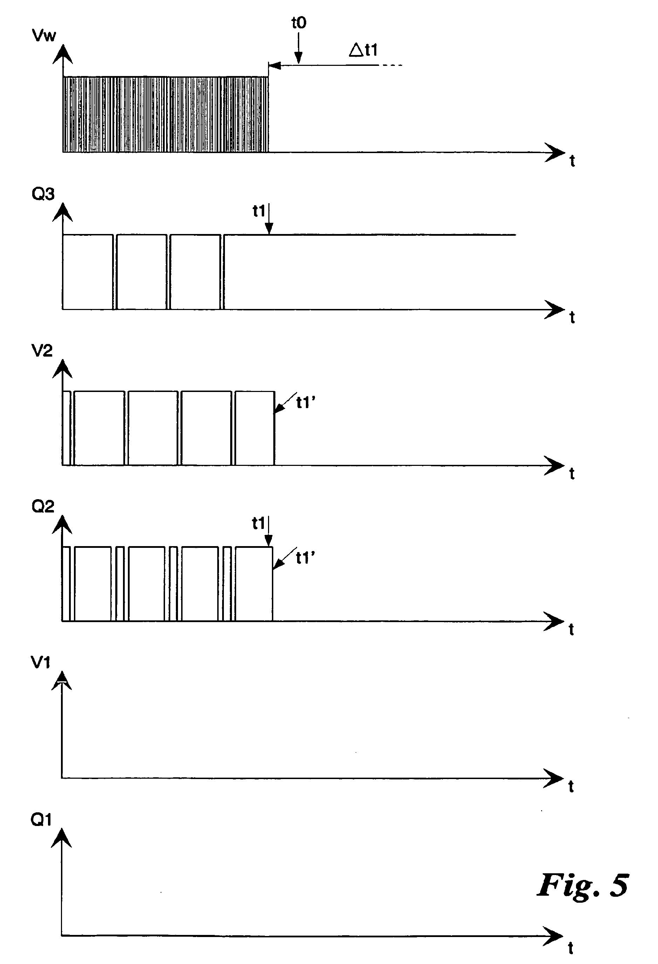

Bei den Signalabläufen nach Fig. 5 wird angenommen, dass zu einem Zeitpunkt t1, der beispielhaft vor dem Umschaltzeitpunkt t0 auftritt, eine Fehlfunktion der Watchdog-Überwachungsfunktion festgestellt wird. Nach Beginn eines der ersten Testintervalle Δt1 wird zu dem Zeitpunkt t1 festgestellt, dass der zweite Treiberausgang Q2 entgegen den Erwartungen auf dem High-Pegel verbleibt. Die Ursache ist in einer Fehlfunktion der die Watchdog-Signale überwachenden Schaltungsmittel 20 (Fig. 1) bzw. in einem Defekt der Zeitstufe 22 oder/und des Versorgungstreibers (Fig. 3) zu suchen. Der nicht eingetretene Zustandsübergang am zweiten Treiberausgang Q2 führt dazu. dass zu einem Zeitpunkt t1' mit geringer, systembedingter Verzögerung gegenüber dem Zeitpunkt t1 das zweite Steuersignal V2 auf den öffnenden Zustandspegel (Low-Pegel) bleibend gesetzt wird. Das betreffende Testintervall Δt1 kann nicht beendet und damit auch nicht die erneute Ausgabe von Watchdog-Signalen Vw aufgenommen werden. Ebenso unterbleibt zum Umschaltpunkt t0 der Übergang des ersten Steuersignals V1 in den schließenden Signalpegel. Der Positionsschalter 2 befindet sich in einem Wartezustand.

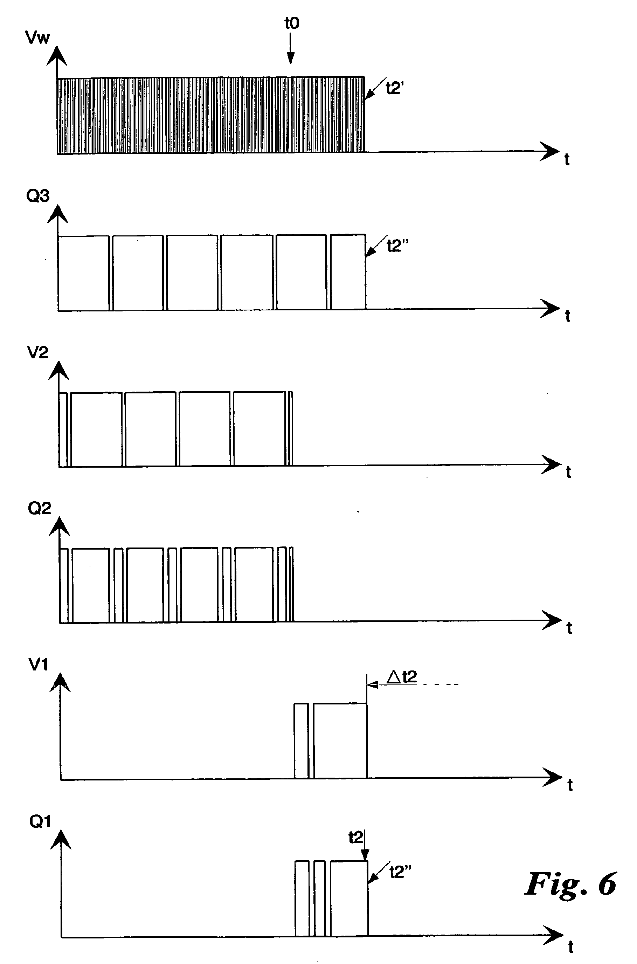

Bei den Signalabläufen nach Fig. 6 wird angenommen, dass zu einem Zeitpunkt t2, der beispielhaft nach dem Umschaltzeitpunkt t0 auftritt, eine Fehlfunktion des Abschaltvermögens festgestellt wird. Nach Beginn eines der zweiten Testintervalle Δt2 wird zu dem Zeitpunkt t2 festgestellt, dass der erste Treiberausgang Q1 entgegen den Erwartungen auf dem High-Pegel verbleibt. Die Ursache ist in einer Fehlfunktion der den ersten Schaltkontakt N1 enthaltenden Ausgangsschaltung 18 (Fig. 1 und Fig. 3) zu suchen. Der nicht eingetretene Zustandsübergang am ersten Treiberausgang Q1 führt dazu, dass zu einem Zeitpunkt t2' mit geringer, systembedingter Verzögerung gegenüber dem Zeitpunkt t2 die Watchdog-Signale Vw bleibend ausgesetzt werden. Daraufhin stellt der dritte Treiberausgang Q3 ab einem gegenüber dem Zeitpunkt t2' geringfügig verzögerten Zeitpunkt t2" keine Stromversorgung mehr für die Schaltkontakte N1 und N2 zur Verfügung, wodurch der erste Treiberausgang Q1 zwangsweise den dem geöffneten Zustand entsprechenden Low-Pegel einnimmt. Das betreffende Testintervall Δt2 kann nicht beendet werden, und damit können auch die Steuersignale V1 und V2 nicht mehr den schließenden Signalpegel (High-Pegel) einnehmen. Der Positionsschalter 2 befindet sich auch in diesem Falle in einem Wartezustand.

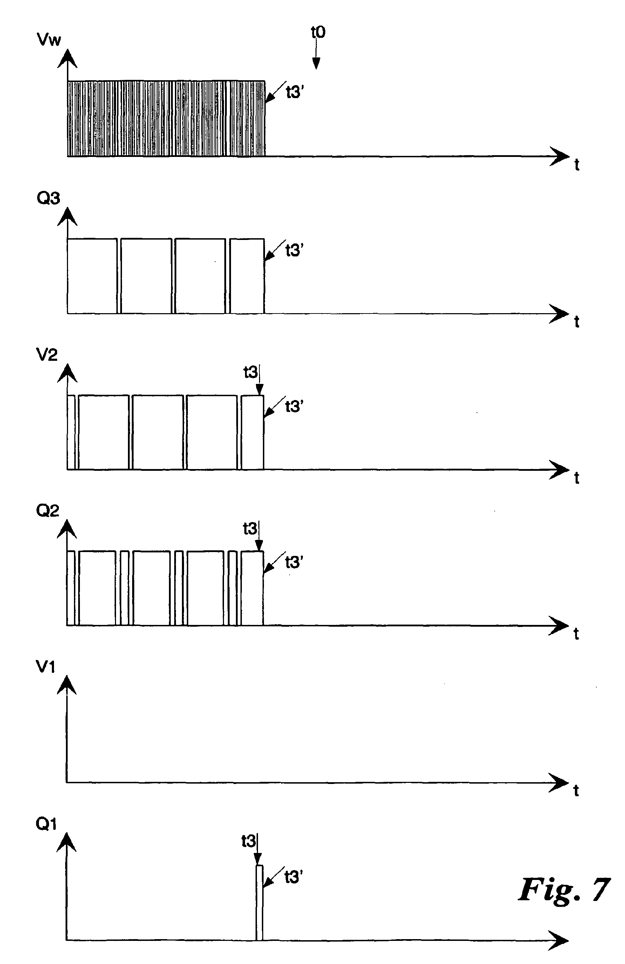

Bei den Signalabläufen nach Fig. 7 wird angenommen, dass zu einem Zeitpunkt t3, der vor dem Umschaltzeitpunkt t0 auftritt, eine anderweitige Nichtübereinstimmung des Zustandes der Schalkontakte N1, N2 mit der logischen Vorgabe festgestellt wird. Bis zu dem Zeitpunkt t3 sind die Zustände der Treiberausgänge Q1 und Q2 in Übereinstimmung mit den Steuersignalen V1 und V2. Zum Zeitpunkt t3 befindet sich der zweite Treiberausgang Q2 in Übereinstimmung mit dem zweiten Steuersignal V2 auf dem High-Pegel. Zu dem Zeitpunkt t3 wird jedoch im Widerspruch zum Low-Pegel des ersten Steuersignals V1 am ersten Treiberausgang Q1 ein High-Pegel festgestellt. Die Ursache ist in einem Defekt der den ersten Schaltkontakt N1 enthaltenden Ausgangsschaltung 18 (Fig. 1 und Fig. 3) oder in einem Defekt der vom ersten Treiberausgang Q1 zum Mikrocontroller 16 zurück führenden zusätzlichen Verstärkerstufe 32 (Fig. 3) zu suchen. Der festgestellte Widerspruches zwischen dem ersten Steuersignal V1 und dem Signalpegel des ersten Treiberausganges Q1 führt dazu, dass ab einem Zeitpunkt t3' mit geringer, systembedingter Verzögerung gegenüber dem Zeitpunkt t3 sowohl die Watchdog-Signale Vw ausgesetzt werden als auch das zweite Steuersignal V2 auf den öffnenden Signalpegel (Low-Pegel) gesetzt wird. Daraufhin nehmen alle drei Treiberausgänge Q1 bis Q3 den Low-Pegel ein. Der Positionsschalter 2 befindet sich auch in diesem Falle in einem Wartezustand.

### Bezugszeichenliste:

- 2: Positionsschalter
- 4: Gehäuse
- 6: Druckfeder
- 8: Betätigungsstößel
- 10: Schleifer
- 14: Stromversorgungsmittel
- 16: Mikrocontroller
- 18; 19: Ausgangsschaltung
- 20: Schaltungsmittel
- 22: Zeitstufe
- 23: Differenzierglied
- 24: Integrierglied
- 26; 28: Anschlussklemmen
- 30 ... 33: Verstärkerstufe
- 34; 36: Außenanschlüsse
- **A** ... **E**: Verfahrensschritte
- Cn: Kondensatoren
- GND: Bezugspotential
- H1: LED-Anzeige
- N1; N2: Schaltkontakte
- N3: Versorgungstreiber
- Q1 ... Q3: Treiberausgang
- R1: Potentiometer
- Rn: Widerstände
- S1: Quittiertaster
- tn; tn'; tn": Zeitpunkte
- Tn: Transistoren
- V1; V2: Steuersignale
- Va: Außenspannung
- Vbb; Vdd: Versorgungspotentiale
- Ve: Eingangsspannung
- Vr: Schwellenwert
- Vs: Schleiferpotential
- Vw: Watchdog-Signale
- X: Schleiferposition
- Y: Betätigungsrichtung
- Z1; Z2: Z-Dioden
- Δt1; Δt2: Testintervalle

## Patentansprüche

1. Verfahren zur Funktionsüberwachung eines elektronisch-mechanischen Positionsschalters (2), enthaltend ein Gehäuse (4), einen Betätigungsstößel (8), ein vom diesem beaufschlagtes Potentiometer (R1), einen Mikrocontroller (16), mindestens einen elektronischen Schaltkontakt (N1; N2), Stromversorgungsmittel (14) und Anschlussklemmen (26; 28), wobei durch den Mikrocontroller (16) ein am Schleifer (10) des Potentiometers (R1) anstehendes Schleiferpotential (Vs) erfasst, gegenüber einem gespeicherten Schwellenwert (Vr) bewertet und nach Über- bzw. Unterschreiten des Schwellenwertes (Vr) durch das Schleiferpotential (Vs) der mindestens eine Schaltkontakt (N1; N2) über ein Steuersignal (V1; V2) geschlossen oder geöffnet wird,
**gekennzeichnet durch** die nacheinander folgenden Verfahrensschritte:
**A** mit ersten Testintervallen (Δt1) werden vom Mikrocontroller (16) ausgegebene, dynamisch wechselnde Watchdog-Signale (Vw) ausgesetzt, worauf Watchdog-Signale überwachende Schaltungsmittel (20) die Stromversorgung des Schaltkontaktes (N1; N2) unterbrechen,
**B** nach dem Zustandsübergang des vom Mikrocontroller (16) überwachten Schaltkontaktes (N1; N2) vom geschlossenen in den geöffneten Zustand werden erneut Watchdog-Signale (Vw) ausgegeben, wogegen bei Ausbleiben des Zustandsüberganges das Steuersignal (V1; V2) zum Öffnen des Schaltkontaktes (N1; N2) gesetzt wird,
**C** innerhalb gegenüber den ersten Testintervallen versetzter, zweiter Testintervalle (Δt2) wird das schließende Steuersignal (V1; V2) zum Öffnen des Schaltkontaktes (N1; N2) umgeschaltet,
**D** nach dem Zustandsübergang des vom Mikrocontroller (16) überwachten Schaltkontaktes (N1; N2) vom geschlossenen in den geöffneten Zustand wird das Steuersignal (V1; V2) zum Schließen des Schaltkontaktes (N1; N2) zurückgeschaltet, wogegen bei ausbleibendem Zustandsübergang die Ausgabe der Watchdog-Signale (Vw) endet.

2. Verfahren nach vorstehendem Anspruch, **gekennzeichnet durch** periodisches Auftreten der ersten und der zweiten Testintervalle (Δt1; Δt2).

3. Verfahren nach einem der vorstehenden Ansprüche, **dadurch gekennzeichnet, dass** die ersten und die zweiten Testintervalle (Δt1; Δt2) nach einem Zeitbereich von 500 bis 1200 Programmzyklen des Mikrocontrollers (16) auftreten.

4. Verfahren nach einem der vorstehenden Ansprüche, **dadurch gekennzeichnet, dass** erst nach wiederholtem Ausbleiben des erwarteten Zustandsüberganges während des ersten bzw. zweiten Testintervalls (Δt1; Δt2) das Steuersignal (V1; V2) zum Öffnen des Schaltkontaktes (N1; N2) wechselt.

5. Verfahren nach einem der vorstehenden Ansprüche, **gekennzeichnet durch**
E Vergleichen des Schaltzustandes des mindestens einen Schaltkontaktes (N1; N2) mit der logischen Vorgabe **durch** den Mikrocontroller (16) außerhalb der Testintervalle (Δt1; Δt2) und bei Nichtübereinstimmung Setzen bzw. Halten des Steuersignals (N1; N2) zum Öffnen sowie Beenden der Watchdog-Signale (Vw).

6. Verfahren nach einem der vorstehenden Ansprüche, **dadurch gekennzeichnet, dass** der Mikrocontroller (16) nach Feststellen eines Fehlers ein Fehlermeldesignal ausgibt.

7. Schaltungsanordnung zur Funktionsüberwachung eines elektronisch-mechanischen Positionsschalters (2), der ein Gehäuse (4), einen Betätigungsstößel (8), ein vom diesem beaufschlagtes Potentiometer (R1), einen Mikrocontroller (16), mindestens einen elektronischen Schaltkontakt (N1; N2), Stromversorgungsmittel (14) zur Bereitstellung von Versorgungspotentialen (Vbb; Vdd) und Anschlussklemmen (26; 28) enthält, wobei durch den Mikrocontroller (16) ein am Schleifer (10) des Potentiometers (R1) anstehendes Schleiferpotential (Vs) erfasst, gegenüber einem gespeicherten Schwellenwert (Vr) bewertet und je nach Über- oder Unterschreiten des Schwellenwertes (Vr) durch das Schleiferpotential (Vs) der mindestens eine Schaltkontakt (N1; N2) über ein Steuersignal (V1; V2) geschlossen bzw. geöffnet wird, **dadurch gekennzeichnet, dass**
- der Mikrocontroller (16) über einen Watchdog-Signalausgang (PTB2) verfügt, über den dynamisch wechselnde Watchdog-Signale (Vw) ausgegeben werden, die mit ersten Testintervallen (Δt1) aussetzen,
- mit dem Watchdog-Signalausgang (PTB2) eine Zeitstufe (22) verbunden ist, deren Ausgang beim Auftreten von Watchdog-Signalen (Vw) einen ersten Ausgangszustand und im Übrigen einen zweiten Ausgangszustand einnimmt,
- mit der Zeitstufe (22) ein Versorgungstreiber (N3) verbunden ist, dessen Ausgang (Q3) bei dem ersten Ausgangszustand der Zeitstufe (22) ein zugeführtes Versorgungspotential (Vbb) durchleitet und anderenfalls sperrt,
- der mindestens eine Schaltkontakt (N1; N2) Bestandteil einer mindestens einen Ausgangsschaltung (18; 19) ist, die vom Ausgang (Q3) des Versorgungstreiber (N3) gespeist wird,
- der Mikrocontroller (16) über mindestens einen zu der Ausgangsschaltung (18; 19) geführten Steuerausgang (PTB5; PTB3) für das mindestens eine Steuersignal (V1; V2) verfügt, das während des schließenden Signalpegels innerhalb gegenüber den ersten Testintervallen (Δt1) versetzter, zweiter Testintervalle (Δt2) kurzzeitig den öffnenden Signalpegel einnimmt, und
- der Mikrocontroller (16) über mindestens einen Kontrolleingang (PTB6; PTB4) verfügt, der mit dem Ausgang (Q1; Q2) des mindestens einen Schaltkontaktes (N1; N2) wirkverbunden ist, wobei der Mikrocontroller (16) das am Kontrolleingang (PTB6; PTB4) anstehenden Kontrollsignals in der Weise verarbeitet, dass im ersten Testintervall (Δt1) nach Übergang des Schaltkontaktes (N1; N2) vom geschlossenen in den geöffneten Zustand erneut Watchdog-Signale (Vw) ausgegeben werden, dagegen bei Ausbleiben des Zustandsüberganges das Steuersignal (V1; V2) bleibend in den öffnenden Zustandpegel überführt wird, und im zweiten Testintervall (Δt2) bei ausbleibendem Zustandsübergang des Schaltkontaktes (N1; N2) vom geschlossenen in den geöffneten Zustand in der Folge die Ausgabe der Watchdog-Signale (Vw) unterbleibt.

8. Schaltungsanordnung nach vorstehendem Anspruch, **dadurch gekennzeichnet, dass** die Zeitstufe (22) nachfolgend aus einer eingangsseitig mit ein passiven Differenzierglied (23) versehenen, ersten Verstärkerstufe (30) und aus einer eingangsseitig mit einem passiven Integrierglied (24) versehenen, zweiten (31) Verstärkerstufe besteht.

9. Schaltungsanordnung nach einem der beiden vorstehenden Ansprüche, **dadurch gekennzeichnet, dass** zwischen dem Ausgang (Q1; Q2) des Schaltkontaktes (N1; N2) und dem Kontrolleingang (PTB6; PTB4) eine zusätzliche Verstärkerstufe (32; 33) angeordnet ist.

10. Schaltungsanordnung nach vorstehendem Anspruch, **dadurch gekennzeichnet**, das die zusätzliche Verstärkerstufe (32; 33) mit entstörenden Schaltungsmitteln (C6; C5) versehen ist.

11. Schaltungsanordnung nach einem der Ansprüche 7 bis 10, **dadurch gekennzeichnet, dass** der Mikrocontroller (16) über einen Meldeausgang (AD1) verfügt, der mit einem optischen Signalelement (H1) verbunden ist und der infolge ausbleibendem Zustandsüberganges des Schaltkontaktes (N1; N2) vom geschlossenen in den geöffneten Zustand während der ersten oder zweiten Testintervalle (Δt1; Δt2) ein Meldesignal abgibt.

## Claims

1. A method of monitoring the functioning of an electronic-mechanical position switch (2), comprising a housing (4), an actuating plunger (8), a potentiometer (R1) acted upon by the latter, a microcontroller (16), at least one electronic switching contact (N1; N2), power supply means (14) and terminals (26; 28), the microcontroller (16) detecting a wiper potential (Vs) present at the wiper (10) of the potentiometer (R1), evaluating it relative to a stored threshold value (Vr), and closing or opening the at least one switching contact (N1; N2) by means of a control signal (V1; V2) once the wiper potential (Vs) has exceeded or fallen below the threshold value (Vr),
**characterised by** the successive method steps:
A with first test intervals (Δt1) the dynamically changing watchdog signals (Vw) output by the microcontroller (16) cease, whereupon switching means (20) monitoring the watchdog signals interrupt the power supply to the switching contact (N1; N2),
B after the change of state of the switching contact (N1; N2) monitored by the microcontroller (16) from the closed to the open state watchdog signals (Vw) are again output, whereas in the absence of the change of state the control signal (V1; V2) is set to opening of the switching contact (N1; N2),
C within second test intervals (Δt2) staggered relative to the first test intervals, the closing control signal (V1; V2) is switched over to opening of the switching contact (N1; N2),
D after the change of state of the switching contact (N1; N2) monitored by the microcontroller (16) from the closed to the open state, the control signal (V1; V2) is switched back to closure of the switch contact (N1; N2), whereas in the absence of the change of state output of the watchdog signals (Vw) is terminated.

2. A method according to the preceding claim, **characterised by** periodic occurrence of the first and second test intervals (Δt1; Δt2).

3. A method according to either one of the preceding claims, **characterised in that** the first and the second test intervals (Δt1; Δt2) occur after a time range of 500 to 1200 programme cycles of the microcontroller (16).

4. A method according to any one of the preceding claims, **characterised in that** only after repeated absence of the expected change of state during the first or second test interval (Δt1; Δt2) does the control signal (V1; V2) change to opening of the switch contact (N1; N2).

5. A method according to any one of the preceding claims, **characterised by**
E comparison of the switching state of the at least one switch contact (N1; N2) with the specified logic value by the microcontroller (16) outside the test intervals (Δt1; Δt2) and, in the event of non-correspondence, setting or holding the control signal (N1; N2) to opening and termination of the watchdog signals (Vw).

6. A method according to any one of the preceding claims, **characterised in that** the microcontroller (16) outputs a fault signal once a fault has been detected.

7. A circuit arrangement for monitoring the functioning of an electronic-mechanical position switch (2), comprising a housing (4), an actuating plunger (8), a potentiometer (R1) acted upon by the latter, a microcontroller (16), at least one electronic switching contact (N1; N2), power supply means (14) for providing supply potentials (Vbb; Vdd) and terminals (26; 28), the microcontroller (16) detecting a wiper potential (Vs) present at the wiper (10) of the potentiometer (R1), evaluating it relative to a stored threshold value (Vr), and closing or opening the at least one switching contact (N1; N2) by means of a control signal (V1; V2) depending on whether the wiper potential (Vs) exceeds or falls below the threshold value (Vr), **characterised in that**
- the microcontroller (16) has a watchdog signal output (PTB2), via which are output the dynamically changing watchdog signals (Vw), which cease with first test intervals (Δt1),
- a timer (22) is connected to the watchdog signal output (PTB2), the output of which timer adopts a first output state in the event of watchdog signals (Vw) and otherwise adopts a second output state,
- a supply driver (N3) is connected to the timer (22), the output (Q3) of which supply driver transmits a supply potential (Vbb) fed thereto in the first output state of the timer (22) and otherwise blocks it,
- the at least one switching contact (N1; N2) is part of an at least one output circuit (18; 19), which is supplied by the output (Q3) of the supply driver (N3),
- the microcontroller (16) has at least one control output (PTB5; PTB3) led to the output circuit (18; 19) for the at least one control signal (V1; V2), which, during the closing signal level, for a short time adopts the opening signal level within second test intervals (Δt2) staggered relative to the first test intervals (Δt1), and
- the microcontroller (16) has at least one check input (PTB6; PTB4), which is in active connection with the output (Q1; Q2) of the at least one switching contact (N1; N2), wherein the microcontroller (16) processes the check signal present at the check input (PTB6; PTB4) in such a way that in the first test interval (Δt1) after change of the switching contact (N1; N2) from the closed to the open state watchdog signals (Vw) are again output, whereas in the absence of the change of state the control signal (V1; V2) is changed persistently to the opening state level, and in the second test interval (Δt2) in the absence of the change of state of the switching contact (N1; N2) from the closed to the open state output of the watchdog signals (Vw) consequently does not occur.

8. A circuit arrangement according to the preceding claim, **characterised in that** the timer (22) consists in succession of a first amplifier stage (30) provided on the input side with a passive differentiator circuit (23) and a second amplifier stage (31) provided on the input side with a passive integrator circuit (24).

9. A circuit arrangement according to either one of the preceding two claims, **characterised in that** an additional amplifier stage (32; 33) is arranged between the output (Q1; Q2) of the switching contact (N1; N2) and the check input (PTB6; PTB4).

10. A circuit arrangement according to the preceding claim, **characterised in that** the additional amplifier stage (32; 33) is provided with interference-suppressing switching means (C6; C5).

11. A circuit arrangement according to any one of claims 7 to 10, **characterised in that** the microcontroller (16) has a signalling output (AD1), which is connected to an optical signal element (H1) and outputs a status signal in the absence of a change of state of the switching contact (N1; N2) from the closed to the open state during the first or second test intervals (Δt1; Δt2).

## Revendications

1. Procédé de surveillance du fonctionnement d'un interrupteur de position électronique-mécanique (2) comprenant un boîtier (4), un coulisseau d'actionnement (8), un potentiomètre (R1) sollicité par celui-ci, un micro-contrôleur (16), au moins un contact de commutation électronique (N1; N2), des moyens d'alimentation en courant (14) et des bornes de raccordement (26; 28), le micro-contrôleur (16) détectant un potentiel de curseur (Vs) appliqué au curseur (10) du potentiomètre (R1), évaluant ce potentiel par rapport à une valeur seuil (Vr) enregistrée et fermant ou ouvrant le au moins un contact de commutation (N1; N2) par le biais d'un signal de commande (V1; V2) selon que le potentiel de curseur (Vs) dépasse la valeur seuil (Vr) resp. passe en-dessous,
**caractérisé par** les étapes de procédé successives suivantes:
A des signaux de type chien de garde (Vw) à variation dynamique émis par le micro-contrôleur (16) sont interrompus avec des premiers intervalles d'essai (Δt1), sur quoi des moyens de commutation (20) surveillant les signaux de type chien de garde interrompent l'alimentation en courant du contact de commutation (N1; N2),
B après le changement d'état du contact de commutation (N1; N2) surveillé par le micro-contrôleur (16), qui passe de l'état fermé dans l'état ouvert, des signaux de type chien de garde (Vw) sont à nouveau émis, alors qu'en l'absence de changement d'état, le signal de commande (V1; V2) est activé pour l'ouverture du contact de commutation (N1; N2),
C le signal de commande de fermeture (V1; V2) est inversé pour l'ouverture du contact de commutation (N1; N2) à l'intérieur de seconds intervalles d'essai (Δt2) décalés par rapport aux premiers intervalles d'essai,
D après le changement d'état du contact de commutation (N1; N2) surveillé par le micro-contrôleur (16), qui passe de l'état fermé dans l'état ouvert, le signal de commande (V1; V2) est remis à zéro pour la fermeture du contact de commutation (N1; N2), alors qu'en l'absence de changement d'état, l'émission des signaux de type chien de garde (Vw) cesse.

2. Procédé selon la revendication précédente, **caractérisé par** la survenue périodique des premiers et des seconds intervalles d'essai (Δt1; Δt2).

3. Procédé selon l'une des revendications précédentes, **caractérisé par le fait que** les premiers et seconds intervalles d'essai (Δt1; Δt2) surviennent après une plage de temps de 500 à 1200 cycles de programme du micro-contrôleur (16).

4. Procédé selon l'une des revendications précédentes, **caractérisé par le fait que** le signal de commande (V1; V2) ne change pour l'ouverture du contact de commutation (N1; N2) qu'après une absence répétée du changement d'état attendu pendant le premier resp. second intervalle d'essai (Δt1; At2).

5. Procédé selon l'une des revendications précédentes, **caractérisé par**
E comparaison de l'état de commutation du au moins un contact de commutation (N1; N2) avec la donnée logique fournie par le micro-contrôleur (16) en-dehors des intervalles d'essai (Δt1; Δt2) et, en cas de non concordance, activation resp. maintien du signal de commande (N1; N2) pour l'ouverture et cessation des signaux de type chien de garde (Vw).

6. Procédé selon l'une des revendications précédentes, **caractérisé par le fait que** le micro-contrôleur (16) émet un signal de signalisation d'erreur après constatation d'une erreur.

7. Circuit de surveillance du fonctionnement d'un interrupteur de position électronique-mécanique (2) qui comprend un boîtier (4), un coulisseau d'actionnement (8), un potentiomètre (R1) sollicité par celui-ci, un micro-contrôleur (16), au moins un contact de commutation électronique (N1; N2), des moyens d'alimentation en courant (14) pour la fourniture de potentiels d'alimentation (Vbb; Vdd) et des bornes de raccordement (26; 28), le micro-contrôleur (16) détectant un potentiel de curseur (Vs) appliqué au curseur (10) du potentiomètre (R1), évaluant ce potentiel par rapport à une valeur seuil (Vr) enregistrée et fermant resp. ouvrant le au moins un contact de commutation (N1; N2) par le biais d'un signal de commande (V1; V2) selon que le potentiel de curseur (Vs) dépasse la valeur seuil (Vr) ou passe en-dessous, **caractérisé par le fait que**
- le micro-contrôleur (16) dispose d'une sortie de signaux de type chien de garde (PTB2) par le biais de laquelle des signaux de type chien de garde à variation dynamique (Vw) sont émis, lesquels signaux sont interrompus avec des premiers intervalles d'essai (Δt1),
- un étage temporel (22) dont la sortie prend un premier état de sortie lorsque surviennent des signaux de type chien de garde (Vw) et un second état de sortie le reste du temps est relié à la sortie de signaux de type chien de garde (PTB2),
- un amplificateur d'alimentation (N3) dont la sortie (Q3) laisse passer un potentiel d'alimentation amené (Vbb) lorsque l'étage temporel (22) est dans le premier état de sortie et le bloque dans les autres cas est relié à l'étage temporel (22),
- le au moins un contact de commutation (N1; N2) fait partie d'un au moins un circuit de sortie (18; 19) qui est alimenté par la sortie (Q3) de l'amplificateur d'alimentation (N3),
- le micro-contrôleur (16) dispose d'au moins une sortie de commande (PTB5; PTB3) connectée au circuit de sortie (18; 19) pour le au moins un signal de commande (V1; V2) qui, pendant le niveau de signal de fermeture, prend brièvement le niveau de signal d'ouverture à l'intérieur de seconds intervalles d'essai (Δt2) décalés par rapport aux premiers intervalles d'essai (Δt1) et
- le micro-contrôleur (16) dispose d'au moins une entrée de contrôle (PTB6; PTB4) qui est connectée fonctionnellement à la sortie (Q1; Q2) du au moins un contact de commutation (N1; N2), le micro-contrôleur (16) traitant le signal de contrôle appliqué à l'entrée de contrôle (PTB6; PTB4) de manière à ce que, dans le premier intervalle d'essai (Δt1), après le passage du contact de commutation (N1; N2) de l'état fermé dans l'état ouvert, des signaux de type chien de garde (Vw) soient à nouveau émis, tandis qu'en l'absence du changement d'état, le signal de commande (V1; V2) est transmis en permanence dans le niveau d'état correspondant à l'ouverture, et que, dans le second intervalle d'essai (Δt2), en l'absence de changement d'état du contact de commutation (N1; N2) de l'état fermé dans l'état ouvert, l'émission des signaux de type chien de garde (Vw) soit par conséquent omise.

8. Circuit selon la revendication précédente, **caractérisé par le fait que** l'étage temporel (22) est formé, par suite, d'un premier étage amplificateur (30) pourvu d'un différentiateur passif (23) sur le côté d'entrée et d'un second étage amplificateur (31) pourvu d'un intégrateur passif (24) sur le côté d'entrée.

9. Circuit selon l'une des deux revendications précédentes, **caractérisé par le fait qu'**un étage amplificateur supplémentaire (32; 33) est situé entre la sortie (Q1; Q2) du contact de commutation (N1; N2) et l'entrée de contrôle (PTB6; PTB4).

10. Circuit selon la revendication précédente, **caractérisé par le fait que** l'étage amplificateur supplémentaire (32; 33) est pourvu de moyens de circuit antiparasites (C6; C5).

11. Circuit selon l'une des revendications 7 à 10, **caractérisé par le fait que** le micro-contrôleur (16) dispose d'une sortie de signalisation (AD1) qui est reliée à un élément de signalisation optique (H1) et qui, suite à l'absence d'un changement d'état du contact de commutation (N1; N2) de l'état fermé dans l'état ouvert, délivre un signal de détection pendant les premiers ou seconds intervalles d'essai (Δt1; Δt2).
